(19) Europäisches Patentamt
European Patent Office
Office européen des brevets

(11) **EP 4 174 116 A1**

(12) **EUROPEAN PATENT APPLICATION**
published in accordance with Art. 153(4) EPC

(43) Date of publication:
**03.05.2023 Bulletin 2023/18**

(21) Application number: **21831991.1**

(22) Date of filing: **14.06.2021**

(51) International Patent Classification (IPC):
*C08J 5/18* (2006.01)     *B65D 65/46* (2006.01)
*C08J 7/00* (2006.01)

(52) Cooperative Patent Classification (CPC):
**B65D 65/46; C08J 5/18; C08J 7/00**

(86) International application number:
**PCT/JP2021/022539**

(87) International publication number:
**WO 2022/004345 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2020 JP 2020111940**

(71) Applicant: **Kuraray Co., Ltd.**
**Kurashiki-shi, Okayama 710-0801 (JP)**

(72) Inventors:
• **OKAMOTO Minoru**
**Kurashiki-shi, Okayama 710-0801 (JP)**
• **SHIMIZU Sayaka**
**Kurashiki-shi, Okayama 713-8550 (JP)**
• **KAZETO Osamu**
**Kurashiki-shi, Okayama 713-8550 (JP)**

(74) Representative: **D Young & Co LLP**
**120 Holborn**
**London EC1N 2DY (GB)**

(54) **WATER-SOLUBLE FILM AND PACKAGING**

(57)     [Problem to be solved] To provide a water-soluble film that is excellent in high-speed printability and moisture resistance.

[Solution] A water-soluble film containing a polyvinyl alcohol resin, wherein the water-soluble film has a surface on at least one side in which an abundance ratio of carbon-oxygen single bond (C-O) in all carbon element bonds obtained by X-ray photoelectron spectroscopy is in the range of 75 to 85%.

EP 4 174 116 A1

**Description**

## TECHNICAL FIELD

The present invention relates to a water-soluble film suitably used for packaging various chemicals and a package using the same.

## RELATED ART

Conventionally, water-soluble films have been used in a wide range of fields, taking advantage of their water-solubility, such as packaging of various chemicals such as liquid detergents and pesticides, and seed tapes encapsulating seeds.

For water-soluble films to be used for such an application, polyvinyl alcohol resins (hereinafter, may be referred to as "PVA") are mainly used, and films with improved water solubility have been proposed by blending various additives such as plasticizers or by using modified polyvinyl alcohol (see, for example, Patent Document 1).

## PRIOR ART DOCUMENT

## PATENT DOCUMENT

Patent Document 1: JP-A 2017-078166

## SUMMARY OF THE INVENTION

## PROBLEM TO BE SOLVED BY THE INVENTION

Water-soluble films using PVA have better affinity with printing inks than other general plastic films and can be printed without special prescriptions or treatments. However, in recent years, it has become clear that if a printing line speed is increased in order to further improve productivity, print omission, ink peeling, and the like may occur even on water-soluble films using PVA. That is, there is room for improvement in a high-speed printability of the water-soluble film using the PVA.

Methods for improving the high-speed printability of a water-soluble film using PVA include (i) a method of adding a hydrophilic plasticizer to the water-soluble film, and (ii) a method of subjecting the water-soluble film to surface modification such as ozone treatment or corona treatment. However, although the high-speed printability of the film can be improved by any of the above methods (i) and (ii), moisture resistance of the film is reduced at the same time, so that shape stability of a package wrapped with the film may be lowered, or the package may be broken due to blocking between the films. That is, in the water-soluble film using the PVA, it has been difficult to achieve both the high-speed printability and the moisture resistance of the film.

Accordingly, an object of the present invention is to provide a water-soluble film that is excellent in high-speed printability and moisture resistance.

## MEANS FOR SOLVING THE PROBLEM

X-ray photoelectric spectroscopy (hereinafter, may be referred to as "XPS") is a method for quantifying an amount of elements present on the film surface or the like. In the case of a water-soluble film using PVA, it is possible to quantify each element such as fluorine (F) and silicon (Si) in addition to carbon (C) and oxygen (O) by XPS measurement.

Further, it is also possible to determine bonding state of the element and its abundance ratio from a detailed analysis of each element by XPS. For example, it is possible to distinguish between each bond state of carbon and determine the ratio of each bond in all carbon bonds.

The present inventors have made intensive studies based on the knowledge of detailed analysis of various elements by XPS, and as a result, the inventors have found that the above object is achieved by adjusting an abundance ratio of carbon-oxygen single bond (hereinafter, may be referred to as "C-O") in all carbon element bonds, which is obtained by analyzing the surface of one or both surfaces of the water-soluble film by the X-ray photoelectron spectroscopy, to a specific range. Based on this knowledge, the inventors have further studied and completed the present invention.

That is, the present invention relates to:

[1] A water-soluble film containing a polyvinyl alcohol resin,

wherein the water-soluble film has a surface on at least one side in which an abundance ratio of carbon-oxygen single bond (C-O) in all carbon element bonds obtained by X-ray photoelectron spectroscopy is in the range of 75 to 85%.

Further, the present invention relates to:

[2] The water-soluble film in the above-mentioned item [1], wherein on the surface where the abundance ratio of C-O in all the carbon element bonds is within the above range, a ratio (C-C/C-O) of an abundance ratio of carbon-carbon single bond (C-C) obtained by the X-ray photoelectron spectroscopy to the abundance ratio of C-O is 0.1 to 0.3;

[3] The water-soluble film in the above-mentioned item [1] or [2], wherein on the surface where the abundance ratio of C-O in all the carbon element bonds is within the above range, an abundance ratio of carbon in all elements obtained by the X-ray photoelectron spectroscopy is 50 to 70%, an abundance ratio of oxygen is 20 to 35%, and a ratio of carbon to oxygen (C/O) is 1.5 to 3.5;

[4] The water-soluble film in any one of the above-mentioned items [1] to [3], wherein the surface having the abundance ratio of C-O in all the carbon element bonds within the above range is subjected to surface modification; and

[5] The water-soluble film in the above-mentioned item [4], wherein the surface modification is by any method of ultraviolet treatment, ozone treatment, corona treatment, and plasma treatment.

Furthermore, the present invention relates to:

[6] The water-soluble film in any one of the above-mentioned items [1] to [5], wherein a film forming stock solution is poured onto a surface of a support having a wetting tension in the range of 20 to 60 mN/m and dried.

Furthermore, the present invention relates to:

[7] A package in which the water-soluble film described in any one of the above mentioned items [1] to [5] stores a chemical;

[8] The package in the above-mentioned item [7], wherein the chemical is a pesticide, a detergent or a disinfectant;

[9] The package in the above-mentioned item [7] or [8], wherein the chemical is in a liquid form; and

[10] The package in any one of the above-mentioned items [7] to [9], wherein the surface where the abundance ratio of CO in all the carbon element bonds is 75 to 85% is a printing surface.

## EFFECTS OF THE INVENTION

According to the present invention, it is possible to provide a water-soluble film that is excellent in high-speed printability and moisture resistance.

## MODE FOR CARRING OUT THE INVENTION

The present invention is specifically described below.

<XPS measurement>

In the present invention, an amount of elements on a surface of a water-soluble film is measured by XPS. XPS measurement involves irradiating a surface of a sample with X-rays to excite inner-shell electrons of atoms and detecting a kinetic energy of emitted photoelectrons to identify and quantify elements existing on the surface of the sample and to analyze chemical bonding state. XPS analysis can measure elements existing at a depth of about 2 to 8 nm from the surface.

In this XPS measurement, when a horizontal axis is kinetic energy and a vertical axis is intensity, a peak called to C1s is obtained due to photoelectrons derived from carbon atoms existing on the sample surface. This peak is a composite of various peaks depending on bonding state of carbon atoms. Positions of these various peaks are determined by the bonding state of the carbon atoms. For example, carbon-carbon single bond (hereinafter, may be referred to as "C-C") or carbon-hydrogen bond (hereinafter, may be referred to as "C-H") shows a peak at 285 eV, C-O shows a peak at 286.6 eV, carbon-nitrogen single bond (hereinafter, may be referred to as "C-N") shows a peak at 285.7 eV, carbonyl (hereinafter, may be referred to as "C=O") shows a peak at 287.7 eV, ester bond (hereinafter, may be referred to as "C(=O)-O") shows a peak at 289.4 eV, and carbonate bond (hereinafter, may be referred to as "O-C(=O)-O") shows a peak at 290 eV. The C1s peaks obtained by synthesizing these peaks can be separated into individual peaks, for example, by automatic waveform separation fitting attached to an XPS analyzer (Reference patent document: JP-A-2007-302740).

The peaks attributed to each of the above bonds are obtained by detailed analysis (narrow scan) of C1s. The narrow scan is an analysis method in which a narrow energy range is scanned under high energy resolution conditions, and the chemical state of the element to be analyzed can be specified from the peak positions and peak shapes.

The water-soluble film of the present invention is a water-soluble film in which an abundance ratio of C-O in all carbon bonds is in the range of 75 to 85% on at least one surface. If the abundance ratio of C-O is less than 75%, high-speed printability becomes insufficient, and problems such as print omission and peeling of ink tend to occur during high-speed printing. On the other hand, if the ratio exceeds 85%, the films tend to adhere to each other and shape stability of a package tends to deteriorate due to poor moisture resistance.

The abundance ratio of C-O is preferably 76% or more, more preferably 77% or more, and even more preferably 78% or more. The abundance ratio of C-O is preferably 84.5% or less.

Note that regarding the "abundance ratio of C-O in all carbon bonds", the C1s peak is analyzed in detail by the narrow scan described above, the automatic waveform separation fitting described above determines the ratio of the peak attributed to C-O in the C1s peak, and the ratio (%) is defined as the abundance ratio of C-O.

In the present invention, the abundance ratio of C-O in the surface portion may be in the range of 75 to 85% on either one side or both sides of the water-soluble film. In the case of only one side, it is preferable to turn that side to a printing surface when printing on the film.

In the water-soluble film of the present invention, as described above, the abundance ratio of C-O on at least one surface is in the range of 75 to 85%, and from the viewpoint of improving the high-speed printability and the moisture resistance of the film, the surface has a ratio of an abundance ratio of C-C obtained by X-ray photoelectron spectroscopy to the abundance ratio of C-O (hereinafter, may be abbreviated as "C-C/C-O") is preferably 0.1 to 0.3.

Like the abundance ratio of C-O, the abundance ratio of C-C is obtained by analyzing the C1s peak in detail by the narrow scan described above, and by the automatic waveform separation fitting described above, a ratio (%) of a peak attributed to the carbon-carbon single bond in the C1s peak is obtained, and the ratio (%) is defined as the abundance ratio of C-C.

Further, a value obtained by dividing the abundance ratio of C-C by the abundance ratio of C-O is defined as C-C/C-O.

A large C-C/C-O ratio means that the ratio of C-C that is hydrophobic is large, and the film surface becomes hydrophobic. If the surface of the film is highly hydrophobic, the high-speed printability of the film may deteriorate. On the other hand, when C-C/C-O is small, it means that the proportion of hydrophilic groups on the film surface is large, and moisture resistance is lowered, which may lead to adhesion between films and poor shape stability of the package. From the above viewpoint, C-C/C-O is preferably 0.1 to 0.3, more preferably 0.11 to 0.27, even more preferably 0.12 to 0.24.

In addition, from the viewpoint of improving the high-speed printability and the moisture resistance of the film, on the surface having the abundance ratio of C-O in the range of 75 to 85%, it is preferable that an abundance ratio of carbon in all elements obtained by XPS measurement is 50 to 70%, an abundance ratio of oxygen is 20 to 35%, and a ratio of carbon to oxygen is 1.5 to 3.5.

Almost all kinds of elements can be measured by XPS measurement. In the present invention, as a result of XPS measurement of the film surface, the measured carbon, nitrogen, oxygen, fluorine, sodium, silicon, phosphorus and sulfur (all these measured elements may hereinafter be referred to as "all the elements measured") are quantified, and the ratio of the carbon element and the ratio of the oxygen element to the total amount are defined as the abundance ratio of carbon and the abundance ratio of oxygen, respectively.

In general, when the surface of a PVA film is subjected to XPS measurement, the measured elements originate from PVA, plasticizers, additives, etc., which will be described later. That is, elements other than the above carbon, nitrogen, oxygen, fluorine, sodium, silicon, phosphorus and sulfur can be measured depending on types of plasticizers, additives, etc. contained in the PVA film. However, in the present invention, the ratio of the carbon element and the ratio of the oxygen element to the total amount of all the elements measured above are defined as the abundance ratio (%) of carbon and the abundance ratio (%) of oxygen, respectively.

Further, the ratio of carbon to oxygen (hereinafter, may be abbreviated as "C/O") is a value obtained by dividing the abundance ratio of carbon by the abundance ratio of oxygen.

When the abundance ratio of carbon is less than 50% or exceeds 70%, the high-speed printability of the film tends to be poor. The abundance ratio of carbon in all elements is more preferably 52 to 68%, more preferably 50 to 66%.

When the abundance ratio of oxygen is less than 20%, the high-speed printability of the film tends to be poor, and when it exceeds 35%, the humidity resistance tends to decrease. The abundance ratio of oxygen in all elements is more preferably 22.5 to 32.5%, more preferably 25 to 30%.

Further, when C/O is less than 1.5, the humidity resistance of the film tends to be poor, and when it exceeds 3.5, the high-speed printability tends to be poor. C/O is more preferably 1.7 to 3.3, and even more preferably 1.8 to 3.1.

In addition, on the surface of the water-soluble film of the present invention having the abundance ratio of C-O in the range of 75 to 85 %, the abundance ratio of elements other than carbon and oxygen, i.e., nitrogen, fluorine, sodium, silicon, phosphorus, and sulfur, is 0.1 to 30% in total.

In the water-soluble film of the present invention, the abundance ratio of C-O on at least one surface is in the range of 75 to 85%, and it is preferable that both of the following conditions (1) and (2) are satisfied.

(1) from the viewpoint of achieving both the high-speed printability and the moisture resistance, C-C/C-O of the surface is 0.1 to 0.3, more preferably 0.13 to 0.27, and

(2) from the viewpoint of achieving both the high-speed printability and the moisture resistance, the abundance ratio of carbon in all elements on the surface is 50 to 70%, and the abundance ratio of oxygen is 20 to 35%, and the ratio of carbon to oxygen (C/O) is 1.5 to 3.5.

In the present invention, it is important to adjust the abundance ratio of C-O on the surface of the water-soluble film, and if necessary, C-C/C-O, the abundance ratio of carbon, the abundance ratio of oxygen, or C/O within the above ranges. Methods for adjusting the above range include, for example, a method of treating the film surface by controlling treatment conditions such as UV treatment, ozone treatment, corona treatment and plasma treatment, alternatively, a method of applying a chemical solution containing a surfactant to the film surface, a method of adding a suitable surfactant to the water-soluble film, a method of adjusting various conditions in the process of volatilizing the solvent when forming the water-soluble film.

For example, as will be described later, the abundance ratio of C-O can be appropriately controlled by a method of adjusting wetting tension (hydrophilicity) of the surface of a support on which the film forming stock solution is cast in the process of volatilizing the solvent when forming the water-soluble film, a method of adjusting the temperature of the support during drying of the film forming stock solution, a method of adjusting the humidity during drying by blowing hot air with a predetermined moisture content during drying on the support, or the like.

In addition, when the film surface is subjected to corona treatment, the abundance ratio of C-O tends to increase as the amount of corona discharge increases. This tendency is considered to be the same in other surface treatment methods such as UV treatment, ozone treatment, and plasma treatment, and the abundance ratio of C-O can be adjusted by adjusting the irradiation intensity, the amount of discharge or the like in each treatment.

Among the above treatment, the methods for treating the film surface, such as the UV treatment, the ozone treatment, the corona treatment and the plasma treatment, are preferred from the viewpoint of production costs and solvent handling.

A complete dissolution time when the water-soluble film of the present invention is immersed in water at 10°C is preferably 120 seconds or less. Since the complete dissolution time is 120 seconds or less, it can be suitably used as a packaging film for chemicals and the like. The complete dissolution time is more preferably 90 seconds or less, even more preferably 60 seconds or less, and particularly preferably 45 seconds or less. On the other hand, a lower limit of the complete dissolution time is not particularly limited, but the water-soluble film whose complete dissolution time is too short tends to easily cause problems such as blocking between the films and reduction in film strength due to absorption of moisture in the atmosphere. Therefore, the complete dissolution time is preferably 5 seconds or more, more preferably 10 seconds or more, even more preferably 15 seconds or more, and particularly preferably 20 seconds or more.

The complete dissolution time when the water-soluble film is immersed in water at 10°C can be measured as follows. In this regard, deionized water is used as water in the complete dissolution time measurement.

<1> The water-soluble film is place in a thermo-hygrostat adjusted to 20°C-65% RH for 16 hours or more to condition the humidity.

<2> After cutting out a rectangular sample of length 40 mm × width 35 mm from the humidity-conditioned water-soluble film, the sample is sandwiched and fixed between two plastic plates of 50 mm × 50 mm with rectangular windows (holes) of 35mm length × 23mm width so that the longitudinal direction of the sample is parallel to the longitudinal direction of the window and the sample is positioned substantially at the center of the window in the width direction.

<3> 300 mL of deionized water is poured into a 500 mL beaker and adjust the water temperature to 10°C while stirring with a magnetic stirrer equipped with a 3 cm long bar at 280 rpm.

<4> The sample fixed to the plastic plate in <2> above is immersed in the deionized water in the beaker while being careful not to let it come into contact with the bar of the magnetic stirrer.

<5> The time from immersion in the deionized water until the sample immersed in the deionized water completely disappears is measured.

The complete dissolution time measured by the above method depends on the thickness of the sample, but in this specification, the complete dissolution time is defined as the complete dissolution of the sample of the above size regardless of the thickness.

<Polyvinyl alcohol resin>

The water-soluble film of the present invention contains PVA. As the PVA, a polymer produced by saponifying a vinyl ester polymer obtained by polymerizing a vinyl ester monomer can be used. Examples of vinyl ester monomers include vinyl formate, vinyl acetate, vinyl propionate, vinyl valerate, vinyl laurate, vinyl stearate, vinyl benzoate, vinyl pivalate, and vinyl versatate, and the like. Among them, vinyl acetate is preferable as the vinyl ester monomer.

The vinyl ester polymer is preferably obtained using only one or two or more kinds of vinyl ester monomer as a monomer and more preferably obtained using only one kind of vinyl ester monomer as the monomer, and may be a copolymer of one or two or more kinds of vinyl ester monomer and other monomer copolymerizable therewith.

Examples of such other monomer copolymerizable with the vinyl ester monomer include, for example, ethylene; olefins having a carbon number from 3 to 30, such as propylene, 1-butene, and isobutene; acrylic acid and salts thereof; acrylic esters, such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, and octadecyl acrylate; methacrylic acid and salts thereof; methacrylic esters, such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, and octadecyl methacrylate; acrylamide derivatives, such as acrylamide, N-methylacrylamide, N-ethylacrylamide, N,N-dimethylacrylamide, diacetone acrylamide, acrylamidopropanesulfonic acid and salts thereof, acrylamide propyldimethylamine and salts thereof, and N-methylolacrylamide and derivatives thereof; methacrylamide derivatives, such as methacrylamide, N-methylmethacrylamide, N-ethylmethacrylamide, methacrylamidopropanesulfonic acid and salts thereof, methacrylamide propyldimethylamine and salts thereof, and N-methylolmethacrylamide and derivatives thereof; N-vinylamides, such as N-vinylformamide, N-vinylacetamide, and N-vinylpyrrolidone; vinyl ethers, such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, and stearyl vinyl ether; vinyl cyanides, such as acrylonitrile and methacrylonitrile; vinyl halides, such as vinyl chloride, vinylidene chloride, vinyl fluoride, and vinylidene fluoride; allyl compounds, such as allyl acetate and allyl chloride; maleic acid and salts, esters, and acid anhydrides thereof; itaconic acid and salts, esters, and acid anhydrides thereof; vinylsilyl compounds, such as vinyltrimethoxysilane; isopropenyl acetate; and the like. The vinyl ester polymer may have a structural unit derived from one or two or more kinds of the other monomer above.

From the viewpoint of the water solubility and mechanical strength of the water-soluble film, the ratio of structural units derived from other monomer in the vinyl ester polymer is preferably 15 mol% or less, more preferably 5 mol% or less, based on the number of moles of all structural units constituting the vinyl ester based polymer.

A degree of polymerization of the PVA is preferably 200 or more, more preferably 300 or more, and even more preferably 500 or more, from the viewpoint of the film strength. On the other hand, the degree of polymerization is preferably 8,000 or less, more preferably 5,000 or less, and even more preferably 3,000 or less from the viewpoint of PVA productivity, productivity of the water-soluble film, and the like. Here, the degree of polymerization means the average degree of polymerization measured in accordance with the description of JIS K 6726-1994, and the degree of polymerization is determined by the following formula from the intrinsic viscosity $[\eta]$ (unit: deciliter/g) measured in water at 30°C after resaponifying and purifying of the PVA.

$$\text{Degree of polymerization } P_o = ([\eta] \times 10^4 / 8.29)^{(1/0.62)}$$

In the present invention, the degree of saponification of the PVA is preferably 64 to 99.99 mol%. By adjusting the degree of saponification of the PVA in this range, it is easy to achieve both water solubility and physical properties of the film. The degree of saponification is more preferably 70 mol% or more, and even more preferably 75 mol% or more. On the other hand, the degree of saponification is more preferably 99.9 mol% or less, and even more preferably 99.5 mol% or less. In this context, the degree of saponification of the PVA means a ratio (mol%) indicating the number of moles of the vinyl alcohol units based on the total number of moles of the structural units (typically, vinyl ester based monomer units) that may be converted to vinyl alcohol units by saponification and the vinyl alcohol units in the PVA. The degree of saponification of the PVA can be measured in accordance with the description of JIS K6726-1994.

The water-soluble film of the present invention may contain one type of PVA singly or may contain two or more types of PVA having different degrees of polymerization, saponification, modification, and the like.

In the present invention, a content of the PVA in the water-soluble film is not particularly limited, but it is preferably 50% by mass or more, more preferably 80% by mass or more, and even more preferably 85% by mass or more.

<Plasticizer>

In the state of containing no plasticizer, the water-soluble film of the present invention is rigid compared with other plastic films and sometimes have problems of the mechanical properties, such as impact strength, processability during secondary processing, and the like. To prevent these problems, the water-soluble film of the present invention preferably contains a plasticizer. Examples of preferred plasticizers include polyhydric alcohols, and specific examples include polyhydric alcohols, such as ethylene glycol, glycerin, diglycerin, propylene glycol, diethylene glycol, triethylene glycol, tetraethylene glycol, trimethylolpropane, sorbitol, and the like. One kind of these plasticizers may be singly used or two or more kinds of them may be used together. Among these plasticizers, from the viewpoint of not readily bleeding out to the surface of the film and the like, ethylene glycol or glycerin are preferable and glycerin is more preferable.

A content of the plasticizer in the PVA film is preferably 1 parts by mass or more, more preferably 3 parts by mass or more, and even more preferably 5 parts by mass or more with respect to 100 parts by mass of the PVA contained in the water-soluble film. Also, the content of the plasticizer is preferably 70 parts by mass or less, more preferably 50 parts by mass or less, and even more preferably 40 parts by mass or less. If the content of the plasticizer is less than 1 part by mass, the effect of improving mechanical properties such as impact strength may not be sufficient. On the other hand, if the above content exceeds 70 parts by mass, the film may become too flexible, resulting in reduced handleability or bleeding out to the film surface.

<Starch/water-soluble polymer>

For the purpose of imparting mechanical strength to the water-soluble film, maintaining the moisture resistance for handling the film, regulating the rate of flexibilization due to water absorption during the dissolution of the film, or the like, the film of the present invention may contain starch and/or a water-soluble polymer other than PVA.

Examples of the starch include natural starches, such as corn starch, potato starch, sweet potato starch, wheat starch, rice starch, tapioca starch, and sago starch; processed starches subjected to etherification, esterification, oxidation, and the like; and the like, and processed starches are particularly preferable.

A content of starch in the water-soluble film is preferably 15 parts by mass or less, and more preferably 10 parts by mass or less with respect to 100 parts by mass of the PVA. When the content of the starch exceeds 15 parts by mass, there is a risk that processability may deteriorate.

Examples of the water-soluble polymers other than the PVA include dextrin, gelatin, glue, casein, shellac, gum arabic, polyacrylic acid amide, sodium polyacrylate, polyvinyl methyl ether, copolymers of methyl vinyl ether and maleic anhydride, Copolymers of vinyl acetate and itaconic acid, polyvinylpyrrolidone, cellulose, acetylcellulose, acetylbutylcellulose, carboxymethylcellulose, methylcellulose, ethylcellulose, hydroxyethylcellulose, sodium alginate, and the like.

A content of the water-soluble polymer other than the PVA in the water-soluble film is preferably 15 parts by mass or less, and more preferably 10 parts by mass or less with respect to 100 parts by mass of the PVA. When the content exceeds 15 parts by mass, the water solubility of the water-soluble film may be insufficient.

<Surfactant>

In the production of the water-soluble film, it is preferable to add a surfactant to the water-soluble film from the viewpoint of improving handleability and peelability from the film forming apparatus when producing the water-soluble film. Further, by adding an appropriate surfactant to the water-soluble film, the abundance ratio of C-O on the surface of the water-soluble film of the present invention and, if necessary, C-C/CO, the abundance ratios of carbon and oxygen, and C/O can be set within a desired range. Examples of types of surfactants include anionic surfactants and nonionic surfactants.

Examples of the anionic surfactants include carboxylic acid type surfactants such as potassium laurate; sulfate type surfactants such as octyl sulfate; and sulfonic acid type surfactants such as dodecylbenzenesulfonate.

Examples of the nonionic surfactants include polyoxyalkylenealkyl ether type surfactants such as polyoxyethylene lauryl ether and polyoxyethylene oleyl ether; polyoxyalkylenealkyl alkylphenyl ether type surfactants such as polyoxyethylene octylphenyl ether; polyoxyalkylenealkyl alkyl ester type surfactants such as polyoxyethylene laurate; polyoxyalkylenealkyl alkyl amine type surfactants such as polyoxyethylene lauryl amino ether; polyoxyalkylenealkyl alkyl amide type surfactants such as polyoxyethylene lauric acid amide; polyoxyalkylenealkyl polypropylene glycol ether type surfactants such as polyoxyethylene polyoxypropylene ether; alkanolamide type surfactants such as lauric acid diethanolamide and oleic acid diethanolamide; and polyoxyalkylenealkyl allyl phenyl ether type surfactants such as polyoxyalkylene allyl phenyl ether, and the like.

Such surfactants may be used singly or in combination of two or more.

In the present invention, the surfactant that tend to gather on the surface of the film rather than disperse uniformly in the water-soluble film is preferable in order to obtain effects even when added in a small amount. For that purpose, it is preferable to select a material having an appropriate affinity for PVA. Surfactants with too high affinity for the PVA have a strong tendency to disperse uniformly, and surfactants with too low affinity tend to phase-separate to form droplets in the film, reduce the transparency of the film, or bleed out to the surface.

In addition, the surfactants having moderate affinity for the PVA tends to gather on the surface of the PVA film during film formation. Therefore, by adjusting the type and amount of the surfactant, it is possible to control the abundance ratio of C-O on the film surface and the like.

Examples of surfactants having a moderate affinity for the PVA are preferably nonionic surfactants, and in particular, polyoxyalkylene alkyl ether type surfactants are more preferable, and polyoxyalkylene alkyl ethers of aliphatic carboxylic acids (for example, saturated or unsaturated aliphatic carboxylic acids having 8 to 30 carbon atoms) are even more preferable.

A content of the surfactant in the water-soluble film is preferably 0.01 parts by mass or more, more preferably 0.02 parts by mass or more, and even more preferably 0.05 parts by mass or more with respect to 100 parts by mass of the PVA, from the viewpoint of the film formability and peelability of the resulting film. On the other hand, the content of the surfactant is preferably 10 parts by mass or less, more preferably 1 part by mass or less, even more preferably 0.5 part by mass or less, and particularly preferably 0.3 parts by mass or less, from the viewpoint of bleeding out to the surface of the resulting film and cohesiveness of the surfactant. When the content is less than 0.01 part by mass, the film formability tends to deteriorate. In addition, the peelability from the film forming apparatus during the production of the water-soluble film is lowered, or blocking is likely to occur between the films. On the other hand, when the content exceeds 10 parts by mass, bleeding out to the film surface and deterioration of the film appearance due to aggregation of the surfactant tend to occur.

<Other components>

The water-soluble film of the present invention may contain components such as moisture, antioxidants, UV absorbers, lubricants, cross-linking agents, coloring agents, fillers, preservatives, antifungal agents, and other polymer compounds other than the plasticizer, the starch, the water-soluble polymer other than the PVA, and the surfactant, as long as they do not interfere with the effects of the present invention. A ratio of the total weight of the PVA, plasticizer, starch, water-soluble polymer other than PVA, and surfactant to the total weight of the water-soluble film of the present invention is preferably in the range of 60 to 100% by mass, more preferably in the range of 80 to 100% by mass, and even more preferably in the range of 90 to 100% by mass.

From the viewpoint of the secondary processability of the resulting film, a thickness of the water-soluble film is preferably 200 pm or less, more preferably 150 pm or less, even more preferably 100 pm or less, and particularly preferably 50 pm or less. Further, from the viewpoint of the mechanical strength of the water-soluble film, the thickness of the water-soluble film is preferably 5 pm or more, more preferably 10 pm or more, even more preferably 15 pm or more, and particularly preferably 20 pm or more. The thickness of the water-soluble film can be obtained by measuring the thickness at 10 arbitrary points (for example, 10 arbitrary points on a straight line drawn in the length direction of the water-soluble film) and calculating the average value of the measured thicknesses.

<Method for producing water-soluble film>

The method for producing the water-soluble film of the present invention is not particularly limited to. The method may be an arbitrary method, such as a film formation method where a solvent, additives, and the like are added to the PVA and homogenized to obtain a film forming stock solution to be used in casting film formation, wet film formation (discharge into a poor solvent), dry/wet film formation, gel film formation (a method of extracting and removing the solvent after once cooling and gelling the film forming stock solution to obtain the water-soluble film), and combination thereof, melt extrusion film formation where the above film forming stock solution thus obtained is extruded from a T die or the like using an extruder or the like, inflation molding, and the like. Among the methods described above, the casting film-forming method and the melt extrusion film-forming method are preferable because the homogeneous film can be obtained with high productivity. The casting film-forming method or the melt extrusion film-forming method for the water-soluble film will be described below.

In a case of forming the water-soluble film by casting film-formation method or melt extrusion film-formation method, the above film forming stock solution is casted in the form of film on a support, such as a metal roll and a metal belt and heated to remove the solvent and thus solidified to be formed into a film. The solidified film is released from the support, dried as needed by a drying roll, a drying furnace, and the like, and further heat treated as needed to be wound and thus allowed to be produced into a long water-soluble film in a roll.

A volatile content concentration of the film forming stock solution (concentration of the volatile components, such as the solvent removed by volatilization and evaporation during film formation and the like) is preferably in the range of 50 to 90% by mass and more preferably in the range of 55 to 80% by mass. The volatile content concentration of less than 50% by mass causes an increase in the viscosity of the film forming stock solution and sometimes causes difficulty in film formation. Meanwhile, the volatile content concentration of more than 90% by mass causes a decrease in the viscosity and is likely to impair uniformity in the thickness of the film to be obtained.

As used herein, the term "volatile content ratio of the film forming stock solution" refers to a value obtained by the following formula.

$$\text{Volatile content ratio (\% by mass) of film forming stock}$$
$$\text{solution} = \{(Wa-Wb)/Wa\} \times 100$$

In the formula, Wa represents the mass (g) of the film forming stock solution, and Wb represents the mass (g) after drying the film forming stock solution of Wa (g) in an electric heat dryer at 105°C for 16 hours.

Examples of the method of preparing the film forming stock solution include, but not particularly limited to, a method where the PVA and the additives such as a plasticizer, a surfactant and the like are dissolved in a dissolution tank or the like, a method where the PVA in a hydrated state is melt kneaded together with a plasticizer, a surfactant, and the like, using a single-screw extruder or twin-screw extruder, and the like.

The film of the film forming stock solution poured onto the support is solidified by heating and drying on the support and in the subsequent drying process, and the hydrophilicity of the support surface at that time has a great effect on the film surface condition, so that the higher the hydrophilicity of the support, the higher the abundance ratio of C-O in all carbon element bonds on the film surface in contact with the support. It is presumed that this is because the hydroxyl groups of the PVA and the hydrophilic surfactant tend to concentrate on the surface in contact with the support. The hydrophilicity of the support surface can be evaluated by measuring the wetting tension of the support surface as described later.

Drying conditions on the support also have a great effect on the surface condition of the film. For example, when the drying temperature is increased, the drying speed becomes faster, so that the migration of the surfactant is hindered and concentration of the surfactant on the film surface is less likely to occur, which affects the abundance ratio of C-O in all the carbon bonds on the film surface. In addition, when the film of the film forming stock solution is blown with hot air having a small amount of moisture during drying on the support to lower the humidity during drying, the hydrophobic groups tend to gather on the film surface, and conversely, when the hot air containing a large amount of moisture is blown during drying to raise the humidity during drying, the hydrophilic groups tend to gather on the film surface.

Therefore, adjusting the drying conditions during film formation is also one of the methods for controlling the abundance ratio of C-O on the film surface.

The drying conditions during film formation affect the production rate of the film and may limit the raw materials used such as surfactants. Therefore, in order to make the abundance ratio of C-O on the film surface within the range of the present invention, it is preferable not only to adjust the hydrophilicity (wetting tension) of the support and the drying conditions during film formation, but also to use it together with a method of surface-modifying the formed film, as will be described later.

The wetting tension of the surface of a first drying roll or a first drying belt (hereinafter, may be referred to as "first drying roll or the like"), which is a support for casting the film forming stock solution, is preferably in the range of 20 to 60 mN/m from the viewpoint that the abundance ratio of CO on at least one surface of the water-soluble film satisfies the above range. If the wetting tension of the surface of the first drying roll or the like is less than 20 mN/m, the abundance ratio of C-O in all the carbon element bonds may not be sufficiently high, and the high-speed printability may become poor. On the other hand, if the wetting tension exceeds 60 mN/m, the adhesion of the film to the surface of the first drying roll or the like is too high, and there is a possibility that the peeling of the film from the first drying roll or the like becomes difficult. The wetting tension of the surface of the first drying roll or the like is more preferably in the range of 23 to 50 mN/m, even more preferably in the range of 25 to 40 mN/m, and particularly preferably in the range of 28 to 32 mN/m.

Examples of methods for adjusting the wetting tension of the surface of the first drying roll or the like include a method of continuously applying a hydrophilic surfactant to the surface, a method of coating the surface with a hydrophilic resin coating, and a method of treating the surface with an acid aqueous solution Among these methods, the method of continuously applying the hydrophilic surfactant to the surface of the first drying roll or the like is preferable from the viewpoint of cost, quality stability of the obtained film, and the like.

In addition, in the present invention, the wetting tension of the surface of the first drying roll or the like can be measured according to JIS K 6768.

A surface temperature of the first drying roll or the like is preferably 50 to 110°C. When the surface temperature is less than 50°C, the high-speed printability and productivity of the film tend to decrease. When the temperature exceeds 110°C, there is a tendency that film surface abnormalities such as foaming are likely to occur, and the mechanical strength of the film tends to decrease due to a decrease in crystallinity. The surface temperature of the first drying roll or the like is more preferably 60 to 100°C, and even more preferably 65 to 95°C

At the same time as heating the film of the film forming stock solution on the first drying roll or the like, a drying rate may be adjusted by uniformly blowing hot air at a wind speed of 1 to 10 m/sec to the entire area of a non-contact surface side of the film of the film forming stock solution with the first drying roll or the like. From the viewpoint of drying efficiency and uniformity of drying, the temperature of the hot air blown to the non-contact surface side is preferably 50 to 150°C, more preferably 70 to 120°C. From the viewpoint of facilitating adjustment of the abundance ratio of C-O on the film surface within the range of the present invention, a water content in the hot air is preferably 4 to 90 g/m$^3$, more preferably 5 to 70 g/m$^3$, and even more preferably 6 to 50 g/m$^3$.

The film peeled off from the first drying roll or the like continues to be used as a subsequent support (hereinafter, may be referred to as "drying roll or the like", and when there are two or more, "second drying roll", "third drying roll", or "second drying belt", "third drying belt") is preferably dried to the volatile content ratio of 5 to 50% by mass. After drying to the preferred range of the volatile content ratio, it is peeled off and further dried if necessary. A drying method is not particularly limited, and a method using a drying oven can be used in addition to the method of contacting with the drying roll or the like. When the film is dried with a plurality of drying rolls or the like, it is preferable to alternately bring one surface and the other surface of the film into contact with the second drying roll or a second drying belt and thereafter, in order to make both surfaces uniform. For example, the number after the second drying roll is preferably 3 or more, more preferably 4 or more, and even more preferably 5 to 30 including the second drying roll. The temperature after the drying oven, the second drying roll is preferably 40°C or more and 110°C or less. The upper limit of the temperature after the drying oven, the second drying roll, or the second drying belt is more preferably 100°C, and more preferably 90°C. When the temperature after the drying oven, second drying roll or second drying belt is too high, the high-speed printability of the film may be reduced. On the other hand, the lower limit of the temperature after the drying oven and the second drying roll is more preferably 45°C, and more preferably 50°C. When the temperature after the drying oven, the second drying roll or the second drying belt is too low, the mechanical strength of the film may decrease.

The obtained water-soluble film can be further heat-treated as necessary. By performing heat treatment, it is possible to adjust the strength and water solubility of the film. The heat treatment temperature is preferably 60°C or more and 135°C or less. The heat treatment temperature is more preferably 130°C or less. If the heat treatment temperature is too high, there is a risk that the amount of heat applied will be too large and the cold water solubility will decrease.

The water-soluble film thus produced is subjected to further humidity control, cutting of both ends (edges) of the film, and the like as needed, and wound in a roll on a cylindrical core and moisture-proof packaged to form a product.

The volatile content ratio of the PVA film finally obtained by a series of treatments is not particularly limited, but is preferably 1 to 5% by mass, more preferably 2 to 4% by mass.

As described above, the surface-modified water-soluble film is one of the preferred embodiments of the present invention. The method of surface modification is not particularly limited, but it is preferably any of ultraviolet treatment, ozone treatment, corona treatment, and plasma treatment. Among them, the corona treatment is superior in terms of treatment speed, safety, ease of adjustment of the degree of treatment, etc., and is more preferable.

The condition for the corona treatment is preferably in the range of 100 to 400 W·min/m$^2$, more preferably in the range of 120 to 350 W·min/m$^2$, and even more preferably in the range of 150 to 300 W·min/m$^2$ from the viewpoint of the high-speed printability of the film and damage reduction such as coloring and perforation of the film. If the condition for the corona treatment is less than 100 W·min/m$^2$, the improvement in high-speed printability may be insufficient. On the other hand, if it exceeds 400 W·min/m$^2$, problems such as perforation and coloration may occur in the film.

In this regard, the amount of discharge is obtained by the following formula (1).

```
Amount  of  discharge  (W·min/m²)  =  Output  (W/m)/Processing
speed (m/min)    (1)
```

<Application>

The water-soluble film of the present invention is excellent in the high-speed printability and the moisture resistance and can be suitably used for various water-soluble film applications. Examples of the above-mentioned film applications include chemical packaging films, liquid pressure transfer base films, embroidery base films, release films for forming artificial marble, seed packaging films, waste storage bag films, and the like. Among these, the water-soluble film of the present invention is preferably used as the chemical packaging film because the effects of the present invention are exhibited more remarkably, and in particular, it is preferably used as an oxidizable chemical packaging film.

When the water-soluble film of the present invention is used as the chemical packaging film, the types of chemicals include, for example, pesticides, detergents (including bleaching agents), disinfectants, and the like. The physical properties of the chemical are not particularly limited, and may be acidic, neutral, or alkaline. In addition, the chemical may contain a boron-containing compound. The chemical may be in the form of powder, mass, gel or liquid. The form of packaging is also not particularly limited, and the form of unit packaging (preferably sealed packaging) in which the chemical is packaged by unit amount is preferred. The package of the present invention is obtained by applying the water-soluble film of the present invention to the chemical packaging film to package the chemical.

## EXAMPLES

Hereinafter, the present invention will be specifically described below with reference to examples and the like, but the present invention is not limited by the following examples. Evaluation items and evaluation methods adopted in the following examples and comparative examples are as follows.

(1) X-ray photoelectron spectroscopy (XPS) measurement conditions

The film was cut into a size of 5 mm $\times$ 5 mm and set on a measurement base via a conductive double-sided tape. In the measurement, both sides of the film were measured. XPS measured each sample under the following measurement conditions.

Measuring device: Ohi Quantera SXM (ULVAX-PHI. INC.)
Analysis software: Multi Pack ver9.0 (ULVAX-PHI. INC.)
X-ray source: monochromatic AlK$\alpha$ (1486.6 eV)
X-ray beam diameter: 100 $\mu$m$\varphi$ (25 W, 15 kV)
Measurement range: 100 um $\times$ 300 um
Signal capture angle: 45°
Charge neutralization conditions: neutralization electron gun, Ar$^+$ ion gun
Degree of vacuum: $1 \times 10^{-6}$ Pa

In addition, the following elements were measured in the following examples and comparative examples.
Measurement elements: C1s, N1s, 01s, F1s, Na1s, Si2p, P2p, S2p
The obtained spectrum was analyzed to determine the contents of C1s and O1s.
Further, the obtained C1s peak was automatically fitted by the analysis software described above, and the abundance ratios of carbon bonding states C-C and C-O were determined.

(2) High-speed printability

Wood grain was gravure-printed on a base film in an atmosphere of 20°C and 72% RH using three colors of ink for building materials consisting of 70% by weight of a mixture of dye and barium sulfate and 30% by weight of a mixture of alkyd resin and nitrocellulose. The thickness of each printed layer was 2 um, the unwinding tension was 1 kg/m, and the printing speed was 80 m/min. After printing, the multilayer film was dried in a 1 m drying zone heated with hot air at 60°C. The printed surface after drying was observed and evaluated according to the following criteria.

A: Even when observing with a magnifying glass, it was difficult to recognize print omission.
B: It was difficult to recognize the print omission visually, but it was recognizable when observed with a magnifying glass.
C: The print omission could be slightly recognized even visually.
D: The print omission could be clearly recognized even visually.

(3) Humidity resistance

The water-soluble film was cut into a size of 3 cm $\times$ 20 cm, rolled into a cylinder with an inner diameter of about 1 cm with the short side as the axis, and then cut off at both ends. This produced a small roll of the water-soluble film with an inner diameter of 1 cm and a width of 1 cm. Using a double clip with a mouth width of 15 mm (manufactured by Kokuyo Co., Ltd., trade name Scel-bo), the vicinity of the central axis of the obtained roll was sandwiched so that the direction of the portion to be sandwiched by the clip coincided with the axial direction of the roll and stored under conditions of 60°C-90% RH for 16 hours. The film roll after storage was unwound, and the state of agglutination between the contact surfaces at the ends was evaluated according to the following criteria.

A: There was no sticking between the contact surfaces at the ends, and the water-soluble film could be unwound without resistance.
B: Resistance was felt during unwinding, but the water-soluble film could be unwound by applying force.
C: The contact surfaces were agglutinated at the ends, and the water-soluble film could not be unwound.

(4) Complete dissolution time of water-soluble film

The complete dissolution time of the water-soluble film in deionized water at 10°C was determined by the method described above.

<Example 1>

A film forming stock solution containing 100 parts by mass of methyl maleate (MA)-modified PVA obtained by saponifying polyvinyl acetate (degree of saponification: 99 mol%, degree of polymerization: 1700, degree of MA modification: 5 mol%), 20 parts by mass of glycerin as a plasticizer, 0.05 parts by mass of polyoxyethylene dodecyl ether as a surfactant and water, and having a volatile content ratio of 60% by mass was prepared.

A 0.1% by mass aqueous solution of polyoxyethylene dodecyl ether, which is a hydrophilic surfactant, was continuously applied on a first drying roll adjusted to a surface temperature thereof of 85°C with a roll coater so that a coating amount was 2.5 g/m2, and dried by blowing hot air at 85°C. The wetting tension of the surface of the first drying roll on which the hydrophilic surfactant (polyoxyethylene dodecyl ether) was continuously applied was 31.2 mN/m. The filtered film forming stock solution was discharged on the first drying roll (surface temperature: 85°C) in the form of a film, and on the first drying roll, the entire non-contact surface with the first drying roll of the film of the film forming stock solution was dried by blowing hot air having a water content of 24.9 $g/m^3$ and a temperature of 85°C at a speed of 5 m/sec.

Next, the film of the film forming stock solution is peel off from the first drying roll, and the other side of the film of the film forming stock solution, which was different from the side that had been in contact with the first drying roll, was brought into contact with the surface of a first subsequent drying roll having a surface temperature of 85°C (hereinafter, may be referred to as "second drying roll") to dry it. After that, one side and the other side of the film of the film forming stock solution are applied to six drying rolls including the second drying roll (hereinafter, may be referred to as "third drying roll", "fourth drying roll", and the last drying roll is referred to as "seventh drying roll") were sequentially and alternately dried to obtain a film. The surface temperature of the third drying roll and subsequent drying rolls were all 75°C, and no surfactant was applied to the surfaces of the subsequent drying rolls after the second drying roll. Both sides of the obtained film are further alternately contacted with a plurality of heat treatment rolls having a surface temperature of 90°C for 30 seconds in total for heat treatment, wound on a polyvinyl chloride pipe, and a water-soluble film (thickness 35 um, length [Film flow direction] 1200 m, width 1 m) was obtained.

Both sides of the obtained water-soluble film were measured by XPS. As a result, on one film surface, the abundance ratio of carbon-oxygen single bond (C-O) in all carbon element bonds was 81.6%, the ratio (C-C/C-O) of the abundance ratio of carbon-carbon single bond to the abundance ratio of C-O was 0.23, the abundance ratio of carbon in all elements was 72.8%, the abundance ratio of oxygen is 26.8% and the ratio of carbon to oxygen (C/O) was 2.7. In addition, on the other film surface, the abundance ratio of carbon-oxygen single bond (C-O) in all carbon element bonds was 82.2%, the ratio (C-C/C-O) of the abundance ratio of carbon-carbon single bond to the abundance ratio of C-O was 0.22, the abundance ratio of carbon in all elements was 72.8%, the abundance ratio of oxygen is 27.0% and the ratio of carbon to oxygen (C/O) was 2.7. This film had the complete dissolution time of 73 seconds, the result of the high-speed printability evaluation is B, and the result of the moisture resistance evaluation was A.

Table 1 summarizes the composition of the film forming stock solution, the film forming conditions, the XPS analysis results of the obtained water-soluble film and the evaluation results. In Table 1, the surface in contact with the first drying roll was called surface 1, and the surface opposite to the surface 1 (the surface in contact with the second drying roll) was called surface 2.

<Example 2>

A portion of the film obtained in Example 1 was unwound, treated on both sides with a corona treatment apparatus under the condition of 200 W·min/m2, and then wound up. Table 1 shows the XPS analysis results and evaluation results of this water-soluble film.

<Example 3>

A water-soluble film was obtained in the same manner as in Example 2, except that the PVA was changed to unmodified PVA (degree of saponification: 88 mol%, degree of polymerization: 1700) obtained by saponifying polyvinyl acetate, and the water content of the hot air blown over the entire non-contact surface with the first drying roll of the film of the film forming stock solution on the first drying roll was changed to 202.1 $g/m^3$. Table 1 shows the XPS analysis results and evaluation results of this water-soluble film.

<Example 4>

A water-soluble film was obtained in the same manner as in Example 3, except that the hydrophilic surfactant (polyoxyethylene dodecyl ether) was not applied to the first drying roll. The wetting tension on the surface of the first drying roll was 55.2 mN/m. Table 1 shows the XPS analysis results and evaluation results of this water-soluble film.

<Example 5>

A water-soluble film was obtained in the same manner as in Example 2, except that the surfactant in the film forming stock solution was changed from polyoxyethylene dodecyl ether to lauric acid diethanolamide. Table 1 shows the XPS analysis results and evaluation results of this water-soluble film.

<Comparative Example 1>

A water-soluble film was obtained in the same manner as in Example 2, except that the water content of the hot air blown over the entire non-contact surface with the first drying roll of the film of the film forming stock solution on the first drying roll was changed to 202.1 $g/m^3$. Table 1 shows the XPS analysis results and evaluation results of this water-soluble film.

<Comparative Example 2>

A water-soluble film was obtained in the same manner as in Example 1, except that the hydrophilic surfactant (polyoxyethylene dodecyl ether) was not applied to the first drying roll. The wetting tension on the surface of the first drying roll was 55.2 mN/m. Table 1 shows the XPS analysis results and evaluation results of this water-soluble film.

<Comparative Example 3>

A water-soluble film was obtained in the same manner as in Comparative Example 2, except that the PVA was changed to unmodified PVA obtained by saponifying polyvinyl acetate (degree of saponification: 88 mol%, degree of polymerization: 1700). Table 1 shows the XPS analysis results and evaluation results of this water-soluble film.
[TABLE 1]

Table 1

| | | Example 1 | Example 2 | Example 3 | Example 4 | Example 5 | Comparative Example 1 | Comparative Example 2 | Comparative Example 3 |
|---|---|---|---|---|---|---|---|---|---|
| Composition of film forming stock solution | PVA | MA5 | MA5 | Unmodified | MA5 | MA5 | MA5 | MA5 | Unmodified |
| | Degree of saponification (mol%) | 99 | 99 | 88 | 99 | 99 | 99 | 99 | 88 |
| | Surfactant | A | A | A | A | B | A | A | A |
| Film forming conditions | Amount of water contained in hot air blown at first drying roll (g/m$^3$) | 24.9 | 24.9 | 202.1 | 202.1 | 24.9 | 202.1 | 24.9 | 24.9 |
| | Wetting tension of first drying roll (mN/m) | 31.2 | 31.2 | 31.2 | 55.2 | 31.2 | 31.2 | 55.2 | 55.2 |
| | Corona treatment condition (W·min/m$^2$) | None | 200 | 200 | 200 | 200 | 200 | None | None |

(continued)

| | | Example 1 | | Example 2 | | Example 3 | | Example 4 | | Example 5 | | Comparative Example 1 | | Comparative Example 2 | | Comparative Example 3 | |
|---|---|---|---|---|---|---|---|---|---|---|---|---|---|---|---|---|---|
| | | Surface 1 | Surface 2 | Surface 1 | Surface 2 | Surface 1 | Surface 2 | Surface 1 | Surface 2 | Surface 1 | Surface 2 | Surface 1 | Surface 2 | Surface 1 | Surface 2 | Surface 1 | Surface 2 |
| XPS analysis results | Abundance ratio of C-O (%) | 81.6 | 82.2 | 83.7 | 84.1 | 77.2 | 79.0 | 76.8 | 77.5 | 78.2 | 77.5 | 86.1 | 87.5 | 70.3 | 68.2 | 47.1 | 48.2 |
| | C-C/C-O | 0.23 | 0.22 | 0.14 | 0.15 | 029 | 024 | 029 | 030 | 033 | 0.31 | 0.15 | 0.12 | 0.63 | 0_6B | 096 | 0.98 |
| | Abundance ratio of carbon (%) | 72.8 | 72.8 | 65.5 | 61.8 | 69.9 | 66.8 | 67.8 | 65.3 | 59.9 | 68.1 | 73.3 | 70.8 | 71.8 | 69.3 | 60.5 | 67.5 |
| | Abundance ratio of oxygen (%) | 26.8 | 27.0 | 32.4 | 33.3 | 27.1 | 27.8 | 29.8 | 31.3 | 32.9 | 30.3 | 24.7 | 28.3 | 26.5 | 28.1 | 21.6 | 21.6 |
| | c/o | 2.7 | 2.7 | 2.0 | 1.9 | 2.6 | 2.4 | 2.3 | 2.1 | 1.8 | 2.2 | 3.0 | 2.5 | 2.7 | 2.5 | 2.8 | 3.1 |
| Evaluation results | High-speed printability | B | | A | | B | | B | | B | | A | | C | | D | |
| | Moisture resistance | A | | A | | A | | A | | A | | C | | A | | A | |
| | Complete dissolution time (s) | 73 | | 68 | | 55 | | 59 | | 63 | | 42 | | 77 | | 82 | |

Surfactant A: polyoxyethylene dodecyl ether
Surfactant B: lauric acid diethanolamide

EP 4 174 116 A1

From the above results, it can be seen that the water-soluble film of the present invention is excellent in the high-speed printability and the moisture resistance. Since the moisture resistance is excellent, it is considered that the shape stability is also maintained when used as a package. Therefore, the water-soluble film of the present invention can be used for various water-soluble film applications, such as chemical packaging films, liquid pressure transfer base films, embroidery base films, release films for forming artificial marble, seed packaging films, waste storage bag films, and the like. Among these, the water-soluble film of the present invention is more preferably used as the chemical packaging film and is particularly used as an oxidative chemical packaging film for pesticides, detergents (including bleaching agents) and the like.

**Claims**

1.   A water-soluble film containing a polyvinyl alcohol resin,
     wherein the water-soluble film has a surface on at least one side in which an abundance ratio of carbon-oxygen single bond (C-O) in all carbon element bonds obtained by X-ray photoelectron spectroscopy is in the range of 75 to 85%.

2.   The water-soluble film as claimed in claim 1, wherein on the surface where the abundance ratio of C-O in all the carbon element bonds is within the above range, a ratio (C-C/C-O) of an abundance ratio of carbon-carbon single bond (C-C) obtained by the X-ray photoelectron spectroscopy to the abundance ratio of C-O is 0.1 to 0.3.

3.   The water-soluble film as claimed in claim 1 or 2, wherein on the surface where the abundance ratio of C-O in all the carbon element bonds is within the above range, an abundance ratio of carbon in all elements obtained by the X-ray photoelectron spectroscopy is 50 to 70%, an abundance ratio of oxygen is 20 to 35%, and a ratio of carbon to oxygen (C/O) is 1.5 to 3.5.

4.   The water-soluble film as claimed in any one of claims 1 to 3, wherein the surface having the abundance ratio of C-O in all the carbon element bonds within the above range is subjected to surface modification.

5.   The water-soluble film as claimed in claim 4, wherein the surface modification is by any method of ultraviolet treatment, ozone treatment, corona treatment, and plasma treatment.

6.   The water-soluble film as claimed in any one of claims 1 to 5, wherein a film forming stock solution is poured onto a surface of a support having a wetting tension in the range of 20 to 60 mN/m and dried.

7.   A package in which the water-soluble film as claimed in any one of claims 1 to 5 stores a chemical.

8.   The package as claimed in claim 7, wherein the chemical is a pesticide, a detergent or a disinfectant.

9.   The package as claimed in claim 7 or 8, wherein the chemical is in a liquid form.

10.  The package as claimed in any one of claims 7 to 9, wherein the surface where the abundance ratio of C-O in all the carbon element bonds is 75 to 85% is a printing surface.

## INTERNATIONAL SEARCH REPORT

| | International application No. |
|---|---|
| | PCT/JP2021/022539 |

### A. CLASSIFICATION OF SUBJECT MATTER
C08J 5/18(2006.01)i; B65D 65/46(2006.01)i; C08J 7/00(2006.01)i
FI: C08J5/18 CEX; C08J7/00 303; B65D65/46

According to International Patent Classification (IPC) or to both national classification and IPC

### B. FIELDS SEARCHED

Minimum documentation searched (classification system followed by classification symbols)
C08J5/18; B65D65/46; C08J7/00; C08L29/04; B29K29/00

Documentation searched other than minimum documentation to the extent that such documents are included in the fields searched
Published examined utility model applications of Japan          1922–1996
Published unexamined utility model applications of Japan       1971–2021
Registered utility model specifications of Japan               1996–2021
Published registered utility model applications of Japan       1994–2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2015/020045 A1 (KURARAY CO., LTD.) 12 February 2015 (2015-02-12) entire text | 1–10 |
| A | WO 2008/142835 A1 (KURARAY CO., LTD.) 27 November 2008 (2008-11-27) entire text | 1–10 |
| A | JP 2018-154714 A (SEKISUI CHEMICAL CO., LTD.) 04 October 2018 (2018-10-04) entire text | 1–10 |
| A | WO 2015/118978 A1 (KURARAY CO., LTD.) 13 August 2015 (2015-08-13) entire text | 1–10 |
| A | JP 2001-329130 A (KURARAY CO., LTD.) 27 November 2001 (2001-11-27) entire text | 1–10 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 August 2021 (20.08.2021) | 31 August 2021 (31.08.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/022539 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2009-051947 A (THE NIPPON SYNTHETIC CHEMICAL INDUSTRY CO., LTD.) 12 March 2009 (2009-03-12) entire text | 1-10 |
| A | JP 2009-535484 A (CELANESE INTERNATIONAL CORPORATION) 01 October 2009 (2009-10-01) entire text | 1-10 |
| P, A | WO 2020/218321 A1 (KURARAY CO., LTD.) 29 October 2020 (2020-10-29) entire text | 1-10 |

Form PCT/ISA/210 (continuation of second sheet) (January 2015)

| Patent Documents referred in the Report | Publication Date | Patent Family | Publication Date |
|---|---|---|---|
| WO 2015/020045 A1 | 12 Feb. 2015 | US 2016/0194465 A1<br>EP 3031850 A1<br>KR 10-2016-0042872 A<br>CN 105683264 A<br>TW 201509956 A | |
| WO 2008/142835 A1 | 27 Nov. 2008 | CN 101679651 A<br>TW 200904864 A<br>KR 10-2010-0017182 A | |
| JP 2018-154714 A | 04 Oct. 2018 | (Family: none) | |
| WO 2015/118978 A1 | 13 Aug. 2015 | CN 105940050 A<br>KR 10-2016-0118226 A<br>TW 201534473 A | |
| JP 2001-329130 A | 27 Nov. 2001 | (Family: none) | |
| JP 2009-051947 A | 12 Mar. 2009 | KR 10-2009-0023074 A<br>TW 200922467 A | |
| JP 2009-535484 A | 01 Oct. 2009 | US 2007/0259996 A1<br>US 2010/0234492 A1<br>WO 2007/133415 A1<br>EP 2016105 A1<br>CN 101448863 A<br>TW 200804480 A | |
| WO 2020/218321 A1 | 29 Oct. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017078166 A
- JP 2007302740 A